(19) Europäisches Patentamt
European Patent Office
Office européen des brevets

(11) EP 1 561 556 A1

(12) **EUROPEAN PATENT APPLICATION**
published in accordance with Art. 158(3) EPC

(43) Date of publication:
**10.08.2005 Bulletin 2005/32**

(21) Application number: **03758848.0**

(22) Date of filing: **23.10.2003**

(51) Int Cl.7: **B28D 5/00**, C03B 33/027

(86) International application number:
**PCT/JP2003/013587**

(87) International publication number:
**WO 2004/039549 (13.05.2004 Gazette 2004/20)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **29.10.2002 JP 2002314173**

(71) Applicant: **Mitsuboshi Diamond Industrial Co., Ltd.**
**Suita-city, Osaka 564-0044 (JP)**

(72) Inventors:
- **Maekawa, K.**
**Mitsuboshi Diamond Industrial Co., Ltd**
**Suita-city, Osaka 564-0044 (JP)**
- **Ejimatani,A.**
**Mitsubishi Diamond Industrial Co. Ltd**
**Suita-city, Osaka 564-0044 (JP)**

(74) Representative: **TBK-Patent**
**Bavariaring 4-6**
**D-80336 München (DE)**

(54) **METHOD AND DEVICE FOR SCRIBING FRAGILE MATERIAL SUBSTRATE**

(57) A scribe method for a brittle material substrate is a method in which a plurality of scribe lines are formed in directions intersecting with one another in a surface of the brittle material substrate, wherein at least one scribe line in a first direction is formed by a scribe means generating a high-penetration vertical crack in the brittle material substrate by applying impacts of a short period to the point on the surface of the brittle material substrate. After this, at least one scribe line of a second direction in a direction intersecting with the at least one scribe line of the first direction is formed with the scribe means by scribing without producing intersections with the scribe lines of the first direction.

FIG.8

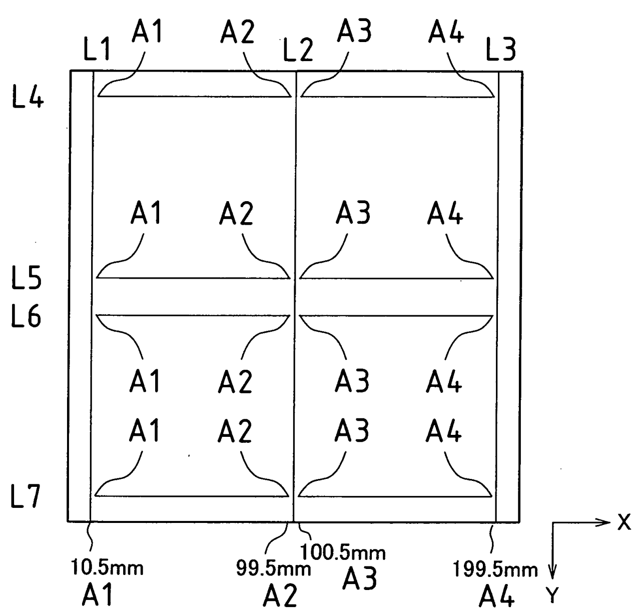




Printed by Jouve, 75001 PARIS (FR)

## Description

### TECHNICAL FIELD

The present invention relates to scribe methods and scribe apparatuses for brittle material substrates with which, in the course of cutting a brittle material substrate, such as a glass substrate used for a flat panel display (referred to as "FPD") below, or a semiconductor wafer or a ceramic substrate, a plurality of scribe lines intersecting with one another are formed on the surface of the brittle material substrate.

### BACKGROUND ART

As products related to FPDs, liquid crystal display panels, liquid crystal projector substrates, organic electroluminescence elements and the like are used in various applications as display means for displaying images and text. In the process of manufacturing liquid crystal display panels, which are an example of such FPDs and are formed by bonding a pair of glass substrates together, two mother glass sheets of large dimensions are bonded together, and then cut to a predetermined size. To cut this mother glass substrate, first, the operation of pressing a cutter wheel against the surface of the mother glass substrate and letting the cutter wheel roll (travel) in one direction is repeated for a predetermined number of times while successively shifting the start position, thus forming parallel scribe lines of a first direction. Then, cross-scribing is performed, which means that scribe lines of a second direction intersecting with the scribe lines of the first direction are formed by changing the travel direction of the cutter wheel to a direction that intersects with the first direction. After this, the cross-scribed mother glass substrate is fed into a breaking machine, the substrate is fragmented along the scribe lines by applying a predetermined bending stress to the substrate with the scribe lines as the center axis, whereby the desired liquid crystal display panel is obtained.

As a cutter wheel that is suitable for such a scribe apparatus for cross-scribing brittle material substrates, the applicant of the present application has already developed a "glass cutter wheel" (see Japanese Patent 3074143; Patent Document 1), in which protrusions are formed by providing fine cut-outs at equal spacing on the blade ridge. A scribe apparatus employing this glass cutter wheel suppresses the occurrence of residual stress during scribing, and makes it possible to attain high-penetration vertical cracks passing through the glass, without increasing the occurrence of unnecessary chipping (horizontal cracks) in the glass fragmentation plane.

When cross-scribing brittle material substrates using a scribe apparatus employing a cutter wheel that has not been subjected to such processing as indentations and protrusions on the blade ridge of the cutter wheel, a phenomenon known as "intersection skipping" (in the vicinity of the location where the cutter wheel passes through the scribe line that has been formed first, the scribe line that is to be formed afterwards is not formed) may occur. This phenomenon is caused by stress remaining on both sides of the scribe line (line of the vertical crack) that has been formed first, and when a scribe line intersecting with the initially formed scribe line is then formed, the pressing force of the cutter wheel with respect to the brittle material substrate for generating the vertical crack is reduced at the location where this stress remains, so that no scribe line is formed. This phenomenon used to occur frequently. However, if cross-scribing is performed with a scribe apparatus provided with a cutter wheel in which protrusions are formed by providing fine cut-outs at equal spacing on the blade ridge, then impacts are applied to the point on the brittle material substrate (hereinafter referred to as point impacts) by the protrusions formed on the ridge portion of the cutter wheel, and when the cutter wheel passes through a location where the above-mentioned stress remains, then the pressing force of the cutter wheel with respect to the brittle material substrate is not reduced, so that the phenomenon known as intersection skipping, which could be observed in conventional scribe apparatuses employing a cutter wheel that is not provided with any processing such as indentations and protrusions on the blade ridge, does not occur, and high-penetration vertical cracks can be attained, so that there was the advantage that the fragmentation operation with the breaking machine after the scribing can be carried out without any difficulties.

Now, a scribe apparatus employing the cutter wheel of Patent Document 1 is unproblematic when the scribe lines are formed only in one direction on the brittle material substrate, but if cross-scribing as described above is carried out (see FIG. 26), then defects known in the art as chipping, chafing and splintering, shown in FIGS. 27 through 29, sometimes occurred at the intersections S between the scribe lines (L1 to L3 and L4 to L7).

"Chipping" occurs (as indicated by the letter a in the figure) when the substrate on the side over which the cutter wheel C is pressed and rolled on the brittle material substrate G sinks down (see the arrow direction in the figure), as shown in FIG. 27, and is lifted onto the half-cut substrate on the other side when hitting the existing scribe lines L1 to L3.

"Chafing" means that the cutter wheel C is pressed and rolled over the brittle material substrate G, as shown in FIG. 28, and before it hits the existing scribe lines L1 to L3, the half-cut substrates rub against one another, and fine chipping occurs at their respective end portions. This is referred to as chafing β.

"Splintering" means that the cutter wheel C is pressed and rolled over the brittle material substrate G, as shown in FIG. 29, and when it is about to hit one of the existing scribe lines L1 to L3, the half-cut scribe lines L1 to L3 (in which the vertical crack K reaches down to about 90% of the thickness of the brittle material substrate G) fragmentate in an oblique direction near the rear surface of the brittle material substrate G. This defect is referred to as splintering Y.

Needless to say, all of these defects harm the quality of the product and cause a lowering of the manufacturing yield of FPD substrates.

In order to address this, the inventors have studied these problems in detail, and as a result have conceived of the invention of this application, focusing on the characteristic phenomena that occur when scribing is performed on brittle material substrates with a cutter wheel as disclosed in Patent Document 1.

That is to say, the inventors could confirm that when scribing is performed with such a cutter wheel, immediately after the scribing start, due to the protrusions formed in the blade ridge of the cutter wheel, the cutter wheel itself does not slip on the brittle material substrate, and a deep vertical crack advances also in the direction opposite to the scribe direction. FIG. 24 and FIG. 25 are schematic diagrams illustrating this phenomenon. Scribing starts (in FIG. 25, the cutter wheel C advances in the direction indicated by the arrow T while rotating in the clockwise direction) in a state in which a blade load (see arrow P in the figure) is applied to the cutter wheel C, and when the load application process starts (see (1) to (3) in FIG. 24), the cutter wheel C does not slip on the brittle material substrate G due to the protrusions in the blade ridge, as noted above, so that a vertical crack K is generated in the brittle material substrate G as the cutter wheel C is rotated and moved (see (2) and (3) in FIG. 24). The high-penetration vertical crack K that is generated immediately after the scribing start is formed such that it advances in the direction opposite to the scribe direction.

Moreover, it was found that during the scribing, the protrusions on the cutter wheel apply impacts to the brittle material substrate and form a vertical crack K, so that the formed vertical crack itself advances in the scribing direction. This phenomenon is such that the point impacts build up energy in the brittle material substrate that advances the vertical crack in the scribe direction, and also after the scribing has stopped, the front end of the vertical crack extends beyond that stop position. As a result, the high-penetration vertical crack is formed such that it advances in the scribe direction.

Accordingly, the inventors anticipated and experimentally confirmed that, by utilizing the above-described phenomena of the advance of the vertical crack, if scribing is started from the vicinity of an existing scribe line of a first direction when cross-scribing, a vertical crack will reach this existing scribe line of the first direction due to the former phenomenon, and if scribing is stopped at the vicinity of an existing next scribe line of the first direction, a vertical crack will reach this existing next scribe line of the first direction due to the latter phenomenon.

Moreover, the inventors found experimentally that if cross-scribing is performed with the above-described cutter wheel, when the load that is applied to the cutter wheel while forming at least one scribe line in the second direction that intersects with a scribe line in the first direction is made smaller than the load that is applied to the cutter wheel while forming at least one scribe line in the first direction, then the above-mentioned defects of chipping, chafing and splintering do not occur at all.

The present invention, which solves the problems of the prior art, was conceived on the basis of the foregoing insights, and provides a scribe method and scribe apparatus with which scribe lines intersecting with one another can be formed without inviting the above-described defects that tend to occur at the scribe line intersections.

## DISCLOSURE OF THE INVENTION

In order to attain this object, a scribe method for a brittle material substrate according to the present invention is a scribe method for a brittle material substrate, in which a plurality of scribe lines are formed in directions intersecting with one another in a surface of the brittle material substrate, wherein, after forming at least one scribe line in a first direction by a scribe means generating a high-penetration vertical crack in the brittle material substrate by applying impacts of a short period to the point on the surface of the brittle material substrate, at least one scribe line of a second direction along a direction intersecting with the at least one scribe line of the first direction is formed with the scribe means by scribing without producing intersections with the scribe line(s) of the first direction.

A scribe apparatus according to the present invention is a scribe apparatus for carrying out the above-described scribe method, and comprises a scribe means generating a high-penetration vertical crack in the brittle material substrate by applying impacts of a short period to the point on the surface of the brittle material substrate; and a travel motion control means for letting the scribe means travel while avoiding scribe lines formed in the first direction when forming the at least one scribe line of the second direction with the scribe means.

With such a scribe method and scribe apparatus, immediately after the scribing for forming a scribe line of the second direction has started behind a position near a scribe line of the first direction, a vertical crack reaches the scribe line of the first direction due to the above-described vertical crack advance phenomenon, and by stopping the scribing immediately before reaching the next scribe line of the first direction, a vertical crack reaches this next scribe line of the first direction to this phenomenon. Thus, by scribing with the scribe means applying impacts of a short period to the point on the brittle material substrate without producing intersections with the at least one scribe line of the first direction, that is, by letting the scribe means travel while avoiding the scribe lines of the first direction, the load of the scribe means is ultimately not applied to the intersections between the scribe lines of the first direction and the scribe lines of the second direction, and the at least one scribe line of the second direction intersecting with the at least one scribe line of the first direction can be formed without the above-noted defects of chipping, chafing and splintering.

Another scribe method according to the present invention is a scribe method for a brittle material substrate, in which a plurality of scribe lines intersecting with one another are formed in a surface of the brittle material substrate, wherein, when sequentially forming in the surface of the brittle material substrate at least one scribe line of a first direction and at least one scribe of a second direction intersecting with the at least one scribe line of the first direction with a scribe mans generating a high-penetration vertical crack in the brittle material substrate by applying impacts of a short period to the point on the surface of the brittle material substrate, the relation between a load P1 that is applied to the scribe means while forming the at least one scribe line in the first direction and a load P2 that is applied to the scribe means while forming the at least one scribe line in the second direction is set to P1 > P2.

Moreover, another scribe apparatus according to the present invention is a scribe apparatus carrying out this other scribe method, the scribe apparatus comprising a scribe means generating a high-penetration vertical crack in the brittle material substrate by applying impacts of a short period to the point on the surface of the brittle material substrate; and a load control means controlling a load applied to the scribe means such that the relation between the load P1 that is applied to the scribe means while forming the at least one scribe line in the first direction and the load P2 that is applied to the scribe means while forming the at least one scribe line in the second direction is P1 > P2.

With this scribe method and scribe apparatus, the afore-mentioned defects of chipping, chafing and splintering do not occur at all.

Consequently, it is possible to improve the product yield of the above-mentioned FPDs.

BRIEF EXPLANATION OF THE DRAWINGS

FIG. 1 is a schematic front view showing an example of a scribe apparatus according to an embodiment of the present invention.

FIG. 2 shows an example of a cutter wheel used in the present invention; FIG. 2(a) is an external lateral view of the cutter wheel taken from the rotation axis direction; FIG. 2(b) is an external front view of the cutter wheel taken from a direction perpendicular to the rotation axis direction; FIG. 2(c) is a magnification of the blade ridge portion A shown in FIG. 2(a).

FIG. 3 is a magnified sectional view showing the vertical crack that occurs when scribing a brittle material substrate with the cutter wheel shown in FIG. 2.

FIG. 4 is a partially magnified view showing another example of a cutter wheel.

FIG. 5 is a partially magnified view showing yet another example of a cutter wheel.

FIG. 6 is a partially magnified view showing another example of a cutter wheel.

FIG. 7 is a top view of a brittle material substrate illustrating a scribe method of the present invention.

FIG. 8 is a top view of a brittle material substrate illustrating a scribe method of the present invention.

FIG. 9 is a partially magnified top view of a brittle material substrate illustrating a scribe method of the present invention.

FIG. 10 is a top view of a brittle material substrate illustrating a working example of the present invention.

FIG. 11 is a partially magnified plan view illustrating the magnitude of the splintering occurring in Working Example 1 of the present invention.

FIG. 12 is a partially magnified plan view illustrating the magnitude of the chipping occurring in Working Example 1 of the present invention.

FIG. 13 is a partially magnified lateral view illustrating the set depth of the cutter wheel with respect to the brittle material substrate (glass sheet) in Working Example 1 of the present invention.

FIG. 14 is a radar chart showing the incidence rate of splintering in Working Example 1 of the present invention.

FIG. 15 is a radar chart showing the incidence rate of splintering in Working Example 1 of the present invention.

FIG. 16 is a radar chart showing the incidence rate of chipping in Working Example 1 of the present invention.

FIG. 17 is a radar chart showing the incidence rate of chipping in Working Example 1 of the present invention.

FIG. 18 is a radar chart showing the incidence rate of chafing in Working Example 1 of the present invention.

FIG. 19 is a radar chart showing the incidence rate of splintering in Working Example 2 of the present invention.

FIG. 20 is a radar chart showing the incidence rate of splintering in Working Example 2 of the present invention.

FIG. 21 is a radar chart showing the incidence rate of chipping in Working Example 2 of the present invention.

FIG. 22 is a radar chart showing the incidence rate of chipping in Working Example 2 of the present invention.

FIG. 23 is a radar chart showing the incidence rate of chafing in Working Example 2 of the present invention.

FIG. 24 is a schematic cross-sectional view illustrating the phenomenon of advancing vertical cracks formed in the brittle material substrate when scribing with the cutter wheel of FIG. 2.

FIG. 25 is a schematic cross-sectional view illustrating the phenomenon of advancing vertical cracks formed in the brittle material substrate when scribing with the cutter wheel of FIG. 2.

FIG. 26 is a top view of a brittle material substrate for illustrating cross-scribing with a conventional scribing method.

FIG. 27 is a figure illustrating the chipping that occurs with the conventional scribing method.

FIG. 28 is a figure illustrating the chafing that occurs with the conventional scribing method.

FIG. 29 is a figure illustrating the splintering that occurs with the conventional scribing method.

## BEST MODE FOR CARRYING OUT THE INVENTION

The following is an explanation of embodiments of the present invention, with reference to the accompanying drawings.

FIG. 1 is a schematic front view showing a scribe apparatus according to an embodiment of the present invention.

This scribe apparatus comprises a horizontally rotatable table 1 to which a brittle material substrate G placed on the table is adsorbed and fixed by a vacuum suction means, for example; a pair of parallel guide rails 2, 2 supporting the table 1 such that it can be moved in the Y direction (direction perpendicular to the paper plane); a ball screw 3 that lets the table 1 move along the guide rails 2, 2; a guide bar 4 installed above the table along the X direction (horizontal direction in the figure), which is perpendicular to the Y direction; a scribe head 5 provided on the guide bar 4 and slidable in the X direction; a motor 6 letting the scribe head 5 slide; a tip holder 7 arranged ascendably/descendably and freely swingably at the lower portion of the scribe head 5; a cutter wheel 8 mounted rotatably to the lower end of the tip holder 7; a pair of CCD cameras 9 that are arranged above the guide bar 4 and recognize alignment marks written onto the brittle material substrate G on the table 1; and a travel motion control means, configured by software, which controls the sliding operation of the scribe head 5, which is supposed to let the cutter wheel 8 travel while avoiding a first scribe line when forming a second scribe line, as well as the ascending/descending operation of the tip holder 7.

It should be noted that the above-described scribe apparatus is only an example, and it may also be of a type in which the scribe head 5 is fixed and the table 1 moves in the X and Y directions, or of a type in which the table 1 is fixed and the scribe head 5 moves in the X and Y directions.

The cutter wheel 8 (8A) show in FIG. 2 is of the type that applies impacts of a short period to the point on the surface of the brittle material substrate G. FIG. 2 (a) is an external lateral view of the cutter wheel 8 seen from a rotation axis direction, and FIG. 2(b) is an external front view of the cutter wheel 8 seen from a direction at right angles to the rotation axis. Moreover, FIG. 2(c) is a magnification of a blade ridge portion A. Here, as shown in FIG. 8(c), protrusions 12 with a height h are arranged at a spacing of a pitch P by cutting out U-shaped grooves 11 in the blade ridge 10 of the cutter wheel 8A.

The cutter wheel 8A given as an example here has a wheel diameter $\phi$ of 2.5 mm, a wheel thickness W of 0.65 mm, a blade angle $2\theta$ of 125°, a protrusion number of 125, a protrusion height h of 5 $\mu$m, and a pitch P of 63 $\mu$m. FIG. 3 shows a glass cross section when a glass sheet of 1.1 mm thickness has been scribed using this cutter wheel 8 under the conditions of 0.35 N blade load and 300 mm/sec scribe speed.

In FIG. 3, the impression L in the upper surface of the glass sheet is generated by press-rolling the cutter wheel 8 over the upper surface of the glass sheet G, and is referred to as "scribe line" (this line extends in the direction perpendicular to the paper plane). Simultaneously to the engraving of this scribe line L, a crack (vertical crack) K extending vertically downward from the scribe line L is generated, and in this case, a long crack (962 $\mu$m according to an actual measurement) that penetrates the glass sheet almost completely in thickness direction is generated, that is, a high-penetration vertical crack is generated.

Thus, with the above-described cutter wheel 8, horizontal cracks are not generated even when the blade load is made large, and a vertical crack K with a high penetration that is proportional to the magnitude of the load is attained. If the vertical crack K that is attained during scribing in this manner has a high penetration, then it is possible to perform accurate breaking along the scribe line in the breaking operation of the next step, increasing the yield. Moreover, since the breaking operation is easy, the content of the breaking step can be eased or simplified.

FIGS. 4 to 6 are partial magnifications showing the circumferential ridge portion of other cutter wheels. The cutter wheel 8B of FIG. 4 is an example of protrusions 121 having a shape that is different from the above-described cutter wheel 8A, and has protrusions 121 formed by cutting out V-shaped grooves 111 in a blade ridge 101.

The cutter wheel 8C shown in FIG. 5 is an example of protrusions 122 having a shape that is again different from the cutter wheels 8A and 8B, and has protrusions 122 formed by cutting out sawtooth-shaped grooves 112 in a blade ridge 102.

The cutter wheel 8D shown in FIG. 6 is an example of protrusions 123 having a shape that is different from the above-described cutter wheels, and has protrusions 123 formed by cutting out rectangular grooves 113 in a blade ridge 103.

The following is an explanation, with reference to FIGS. 7 to 9, of the control of the sliding operation of the scribe head 5 and the ascending/descending operation of the tip holder 7 with the travel motion control means, taking as an example the case that three first scribe lines and four second scribe lines intersecting with the first scribe lines are formed.

First, prior to the scribe operation, the information regarding the formation position of and the distance between the first scribe lines L1 to L3 and the formation position of and the distance between the second scribe lines L4 to L7, as well as the scribe start positions and scribe stop positions for the second scribe lines L4 to L7 between the first scribe lines L1 to L3 is entered as parameters into a computer (not shown in the drawings), on which the software constituting the travel motion control means is installed.

That is to say, as shown in FIG. 7, for the values determining the formation positions of the first scribe lines L1 to L3 and the distances between these, the upper left corner of the brittle material substrate G is taken as a reference point O, and the distance in the X direction (direction to the right in FIG. 7 and FIG. 8) from this reference point O is entered into the computer. Here, in order to simplify explanations, simple values are taken, with the scribe line L1 being 10 mm, the scribe line L2 being 100 mm, and the scribe line L3 being 200 mm in the X direction from the reference point.

Next, as the value determining the formation positions of the second scribe lines L4 to L7 and the distances between these, the distance in the Y direction (downward direction in FIG. 7 and FIG. 8) from the reference point is entered as appropriate into the computer.

Subsequently, for each of the second scribe lines L4 to L7, a value obtained by adding a predetermined distance to the distance of the first scribe line L1 from the reference point O (in the example shown in FIG. 8, this value is 10.5 mm) is entered into the computer as the value determining the scribe start position A1 between the first scribe lines L1 and L2. Moreover, a value obtained by adding a predetermined distance to the distance of the first scribe line L2 from the reference point O (in the example shown in FIG. 8, this value is 100.5 mm) is entered into the computer as the value determining the scribe start position A3 between the first scribe lines L2 and L3. Here, positions that are removed in the X direction by 0.5 mm from the first scribe lines L1 and L2, respectively, are taken as the scribe start positions of the second scribe lines L4 to L7.

Moreover, for each of the second scribe lines L4 to L7, a value obtained by subtracting a predetermined distance from the distance from the reference point O of the first scribe line L2 (in the example shown in FIG. 8, this value is 99.5 mm) is entered into the computer as the value determining the scribe stop position A2 between the first scribe lines L1 and L2. Moreover, a value obtained by subtracting a predetermined distance from the distance of the first scribe line L3 from the reference point O (in the example shown in FIG. 8, this value is 199.5 mm) is entered into the computer as the value determining the scribe stop position A4 between the first scribe lines L2 and L3. Here, positions that are removed in the direction opposite to the X direction by 0.5 mm from the first scribe lines L2 and L3, respectively, are taken as the scribe stop positions of the second scribe lines L4 to L7.

FIG. 9 is a partial magnification showing the scribe start position A1 and stop position A2 between the first scribe lines L1 and L2. In this example, the distance B1 between the first scribe line L1 and the scribe start position A1 as well as the distance B2 between the first scribe line L2 and the scribe stop position A2 are both set to 0.5 mm, but this value can be adjusted as appropriate in accordance with the properties and the thickness of the brittle material substrate G, and the blade load during the scribing and the like, and in practice it is preferable that it is set to about 0.5 to 0.7 mm.

It should be noted that the order of the input of the above-noted values is arbitrary, and there is no limitation to the above-noted example. Furthermore, also the position of the reference point O does not have to be in the upper left corner of the brittle material substrate G, and may also be at any other corner, or at a known predetermined position other than a corner, such as the center of any of the sides.

When the settings of the scribe position values for the first and second scribe lines L1 to L7 have been concluded in this manner, the scribing begins. When the scribing is started, first, the first scribe lines L1 to L3 are formed on the brittle material substrate G, in accordance with the above-noted input values.

When this is finished, the table 1 is rotated 90°, and the scribing of the second scribe lines L4 to L7 is started, but at this time, the scribe head 5 is controlled by the control means to slide along the guide bar 4 to the location above the start position for the second scribe line L4, and after temporarily stopping when it has reached this position, the tip holder 7 is lowered. Thus, the cutter wheel 8 provided on the tip holder 7 is lowered to the above-explained scribe start position A1. After this, the blade load is applied to the cutter wheel 8, and in this state, the scribe head 5 slides toward the next first scribe line L2. When the scribe head 5 starts to slide and the scribing begins, a high-penetration vertical crack is advanced by the cutter wheel 8 in the brittle material substrate G in the direction opposite to the scribe position, that is, in the direction towards the first scribe line L1, and as a result, the starting end of the second scribe line L4 reaches the first scribe line L1.

When the cutter wheel 8 eventually reaches a predetermined position, that is, the scribe stop position A2 set before the first scribe line L2, then the scribe head 5 stops, subsequently the tip holder 7 is lifted, and the cutter wheel 8 is removed from the brittle material substrate G. At the time when the cutter wheel 8 has reached the stop position A2, the front end of the vertical crack extends beyond the stop position further frontward even after the scribing has stopped, as described above, the high-penetration vertical crack is formed such that it advances in the scribe direction, and as a result, the final end of the second scribe line L4 reaches the first scribe line L2.

When tip holder 7 has been lifted, the scribe head 5 slides again toward the X direction, and passes over the first scribe line L2. Then, when the scribe head 5 has reached the location above the scribe start position A3 between the first scribe lines L2 and L3, it is temporarily stopped, and the tip holder 7 is lowered again. Thus, the cutter wheel 8 is lowered to the predetermined scribe position A3, that is removed by a predetermined distance in the X direction from the first scribe line L3. After this, a blade load is again applied to the cutter wheel 8, and in this state, the scribe head 5 slides toward the final first scribe line L3.

When the cutter wheel 8 eventually reaches a predetermined position, that is, the scribe stop position A4 set before the first scribe line L3, then the scribe head 5 stops, subsequently the tip holder 7 is lifted, and the cutter wheel 8 is removed from the brittle material substrate G. This concludes the scribing of the second scribe line L4. After this, the remaining second scribe lines L5 to L7 are formed one after the other in the same manner as described above.

It should be noted that in the above-described embodiment, an example was given in which the scribe means was configured by, among others, the scribe head 5, the tip holder 7 and the cutter wheel 8, but as long as impacts with a short period are applied to the point on the surface of the brittle material substrate G, other configurations are also possible.

For example, it is also possible to apply to a cutter that is pressed against the point on the surface of the brittle material substrate G vibrations brought about by the periodic expansion and contraction of a vibratory actuator to periodically increase the pressure (load) applied to the cutter, thus applying impacts to the point on the brittle material substrate G. An example of this is the apparatus disclosed in Japanese Patent No. 2954566, so that further detailed explanations are omitted.

The following is an explanation of an embodiment of the invention according to claims 3 and 4.

The form of the scribe apparatus is basically the same as the one explained in the above-described embodiment, so that only the differing aspects are explained here.

The aforementioned embodiment is provided with a travel motion control means, configured by software, which controls the sliding operation of the scribe head, which is supposed to let the cutter wheel travel while avoiding first scribe lines when forming the second scribe lines, as well as the ascending/descending operation of the tip holder, but instead of this travel motion control means, this embodiment is provided with a load control means configured by software.

This load control means controls the load applied to the cutter wheel such that the relation between the blade load P1 on the cutter wheel when forming the first scribe lines and the blade load P2 on the cutter wheel when forming the second scribe lines becomes $P1 > P2$.

When providing such a load control means, the above-mentioned defects of chipping, chafing and splintering did not occur at all during the cross-scribing.

The following is a description of working examples.

*Working Example 1*

As shown in FIG. 10, five first scribe lines L1 to L5 and five second scribe lines L6 to L10 were scribed into a glass sheet of 0.7 mm thickness serving as the brittle material substrate, and the incidence rate of the above-noted chipping, chafing and splintering were determined for all 25 intersections between the first and second scribe lines. It should be noted that what is referred to below as the magnitude of the splintering is the dimension indicated by the letter m in FIG. 11, and the magnitude of the chipping is the dimension indicated by the letter n in FIG. 12.

As for the scribe parameters, the travel speed of the cutter wheel was set to 300 mm/sec, and the set depth before the cutter wheel is lifted onto the glass plate (see letter d in FIG. 13), that is, the cut-in amount was set to 0.15 mm. It should be noted that the reference numeral 8 in the figure denotes the cutter wheel, and G' denotes the glass sheet. Moreover, the blade load P1 that is applied to the cutter wheel for the formation of the first scribe lines L1 to L5 was set to the four values 0.15 MPa, 0.20 MPa, 0.25 MPa and 0.30 MPa, and the blade load P2 that is applied to the cutter wheel for the formation of the second scribe lines L6 to L10 was set to the four values 0.15 MPa, 0.20 MPa, 0.25 MPa and 0.30 MPa.

The results of the scribing in accordance with the foregoing are shown in the radar charts of FIGS. 14 to 18.

FIG. 14 shows the incidence rate of splintering with a magnitude of 100 to 200 μm, FIG. 15 shows the incidence rate of splintering with a magnitude of 200 to 300 μm, FIG. 16 shows the incidence rate of chipping with a magnitude of 150 to 300 μm, FIG. 17 shows the incidence rate of chipping with a magnitude of more than 300 μm, and FIG. 18 shows the incidence rate of chafing.

As becomes clear from these figures, if the relation between the blade load P1 with respect to the cutter wheel when forming the first scribe lines L1 to L5 and the blade load P2 with respect to the cutter wheel when forming the second scribe lines L6 to L10 is set to P1 > P2, then the incidence rates of splintering, chipping and chafing decrease.

*Working Example 2*

Scribing was performed with the same parameters as in Working Example 1, except that the travel speed of the cutter wheel was set to 100 mm/sec, the blade load P1 that is applied to the cutter wheel for the formation of the first scribe lines L1 to L5 was set to the three values 0.15 MPa, 0.20 MPa and 0.25 MPa, and the blade load P2 that is applied to the cutter wheel for the formation of the second scribe lines L6 to L10 was set to the three values 0.15 MPa, 0.20 MPa and 0.25 MPa.

The results of this are shown in the radar charts of FIGS. 19 to 23.

FIG. 19 shows the incidence rate of splintering with a magnitude of 100 to 200 μm, FIG. 20 shows the incidence rate of splintering with a magnitude of 200 to 300 μm, FIG. 21 shows the incidence rate of chipping with a magnitude of 150 to 300 μm, FIG. 22 shows the incidence rate of chipping with a magnitude of more than 300 μm, and FIG. 23 shows the incidence rate of chafing.

As becomes clear from these figures, if the relation between the blade load P1 with respect to the cutter wheel when forming the first scribe lines L1 to L5 and the blade load P2 with respect to the cutter wheel when forming the second scribe lines L6 to L10 is set to P1 > P2, then the incidence rates of splintering, chipping and chafing decrease.

It should be noted that in the above-described embodiment, an example was given in which the scribe means was configured by, among others, the scribe head 5, the tip holder 7 and the cutter wheel 8, but as long as impacts with a short period are applied to the point on the surface of the brittle material substrate G, other configurations are also possible.

For example, it is also possible to apply to a cutter that is pressed against the surface of the brittle material substrate G vibrations brought about by the periodic expansion and contraction of a vibratory actuator to periodically increase the pressure (load) applied to the cutter, thus applying impacts to the point on the brittle material substrate G. An example of this is the apparatus disclosed in Japanese Patent No. 2954566, so that further detailed explanations are omitted.

It should be noted that the foregoing explanations were mainly for the case that scribe lines are formed on a glass substrate, which is one kind of brittle material substrate, but there is no limitation to this, and the scribe apparatus and scribe method of the present invention can also be advantageously applied to a step of forming scribe lines on flat panel displays (FPDs) in which brittle material substrates are bonded together such as liquid crystal display panels, plasma display panels (PDPs), or organic EL displays, or on mother bonded substrates such as transmissive projector substrates or reflective projector substrates.

INDUSTRIAL APPLICABILITY

The scribe apparatus and the scribe method of the present invention can be applied to glass substrates serving as brittle material substrates, to FPDs in which brittle material substrates are bonded together and to mother bonded substrates, and are advantageous for forming scribe lines without inviting defects that tend to occur at intersections of the scribe lines formed on these substrates.

**Claims**

1. A scribe method for a brittle material substrate, in which a plurality of scribe lines are formed in directions intersecting with one another in a surface of the brittle material substrate,

   wherein, after forming at least one scribe line in a first direction by a scribe means generating a high-penetration vertical crack in the brittle material substrate by applying impacts of a short period to the point on the surface of the brittle material substrate, at least one scribe line of a second direction along a direction intersecting with the at least one scribe line of the first direction is formed with the scribe means by scribing without producing intersections with the scribe line(s) of the first direction.

2. A scribe apparatus for carrying out the scribe method according to claim 1, the scribe apparatus comprising:

   a scribe means for generating a high-penetration vertical crack in the brittle material substrate by applying impacts of a short period to the point on the surface of the brittle material substrate; and
   a travel motion control means for letting the scribe means travel while avoiding scribe lines formed in the first direction when forming the at least one scribe line of the second direction with the scribe means.

3. A scribe method for a brittle material substrate, in which a plurality of scribe lines intersecting with one another are formed in a surface of the brittle material substrate,

   wherein, when sequentially forming in the surface of the brittle material substrate at least one scribe line of a first direction and at least one scribe line of a second direction intersecting with the at least one scribe line of the first direction with a scribe means generating a high-penetration vertical crack in the brittle material substrate by applying impacts of a short period to the point on the surface of the brittle material substrate, the relation between a load P1 that is applied to the scribe means while forming the at least one scribe line in the first direction and a load P2 that is applied to the scribe means while forming the at least one scribe line in the second direction is set to

$$P1>P2.$$

**4.** A scribe apparatus for carrying out the scribe method according to claim 3, the scribe apparatus comprising:

a scribe means generating a high-penetration vertical crack in the brittle material substrate by applying impacts of a short period to the point on the surface of the brittle material substrate; and

a load control means for controlling a load applied to the scribe means such that the relation between the load P1 that is applied to the scribe means while forming the at least one scribe line in the first direction and the load P2 that is applied to the scribe means while forming the at least one scribe line in the second direction is

$$P1>P2.$$

FIG.1

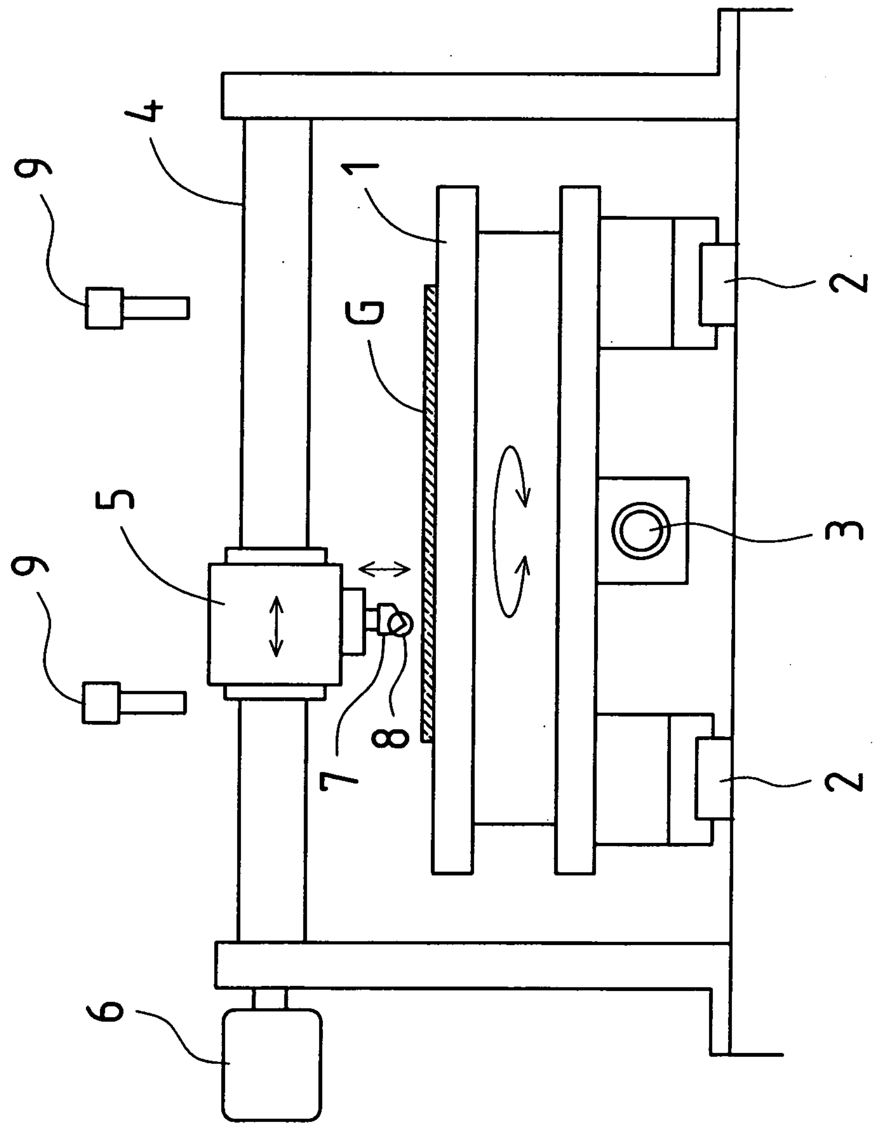

FIG.2

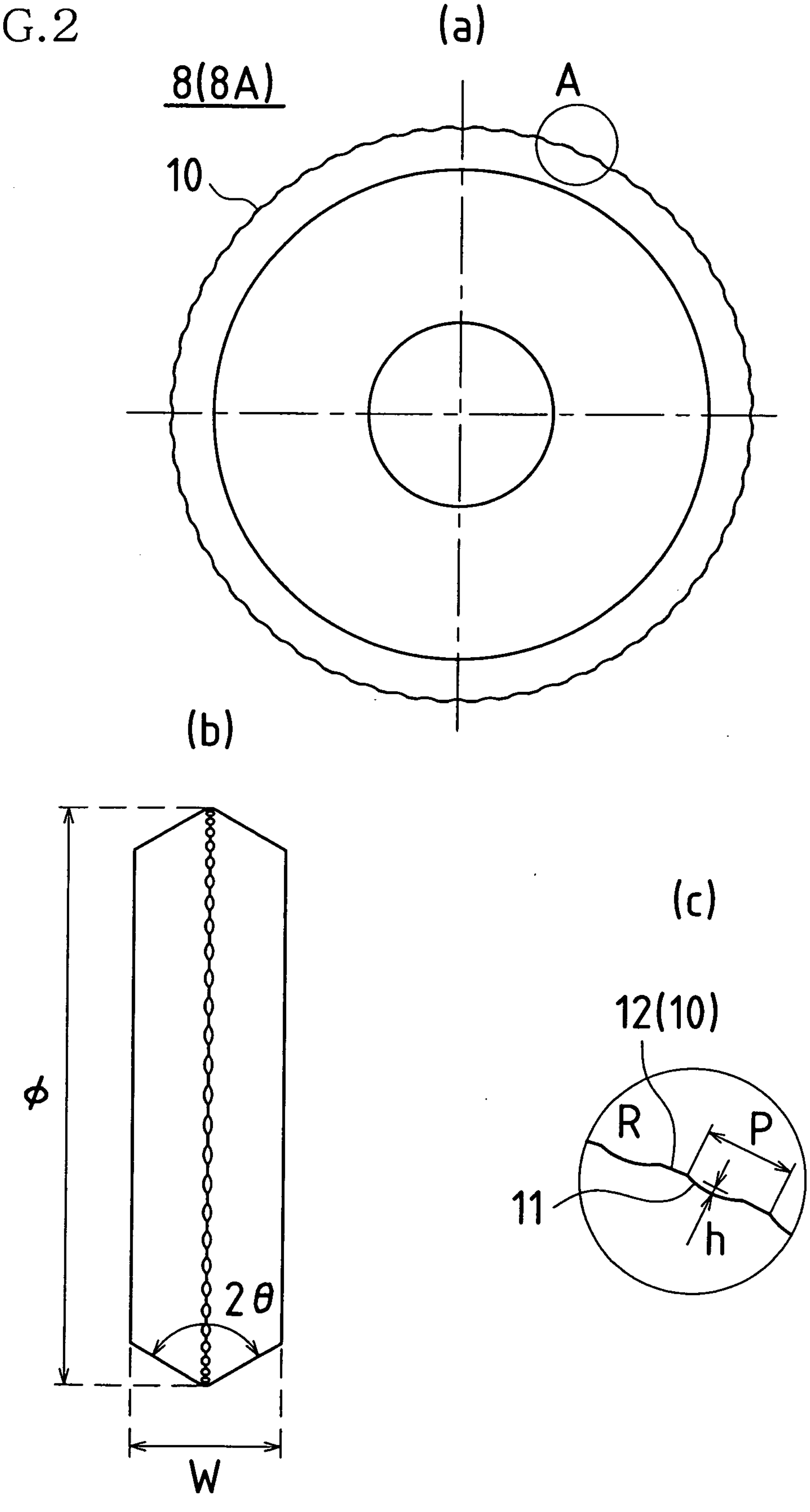

FIG.3

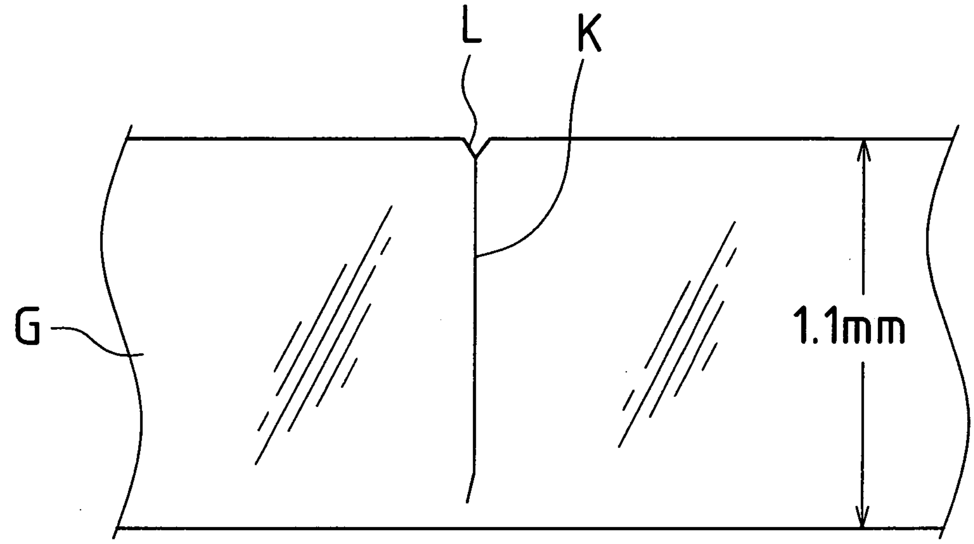


FIG.4

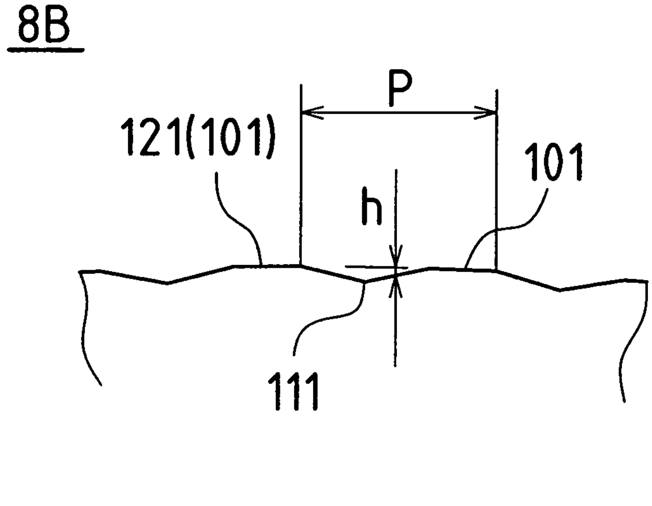

FIG.5

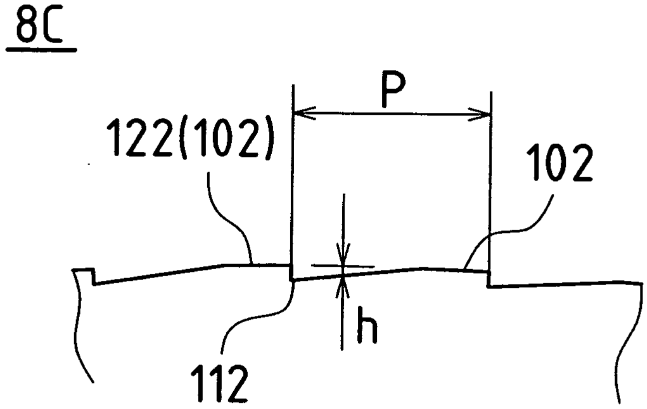


FIG.6

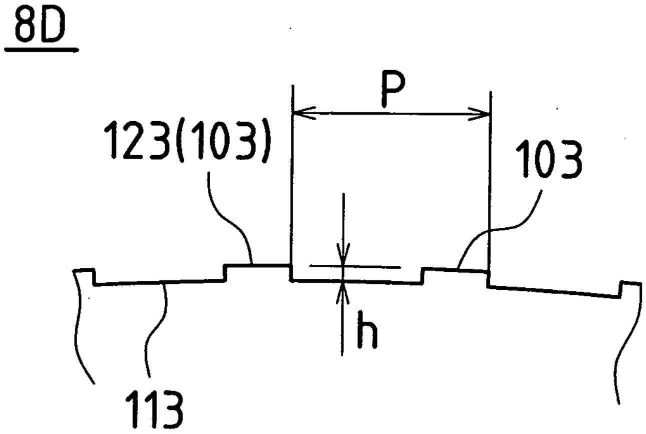

FIG.7

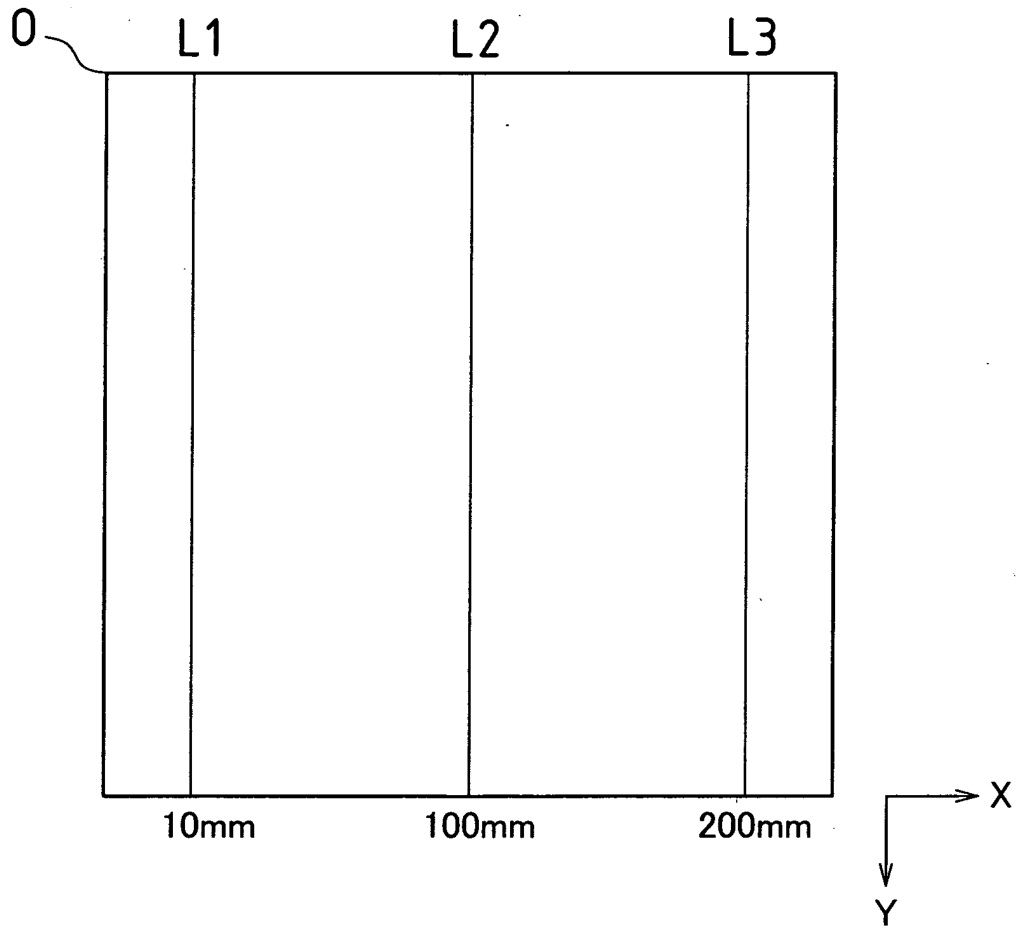

FIG.8

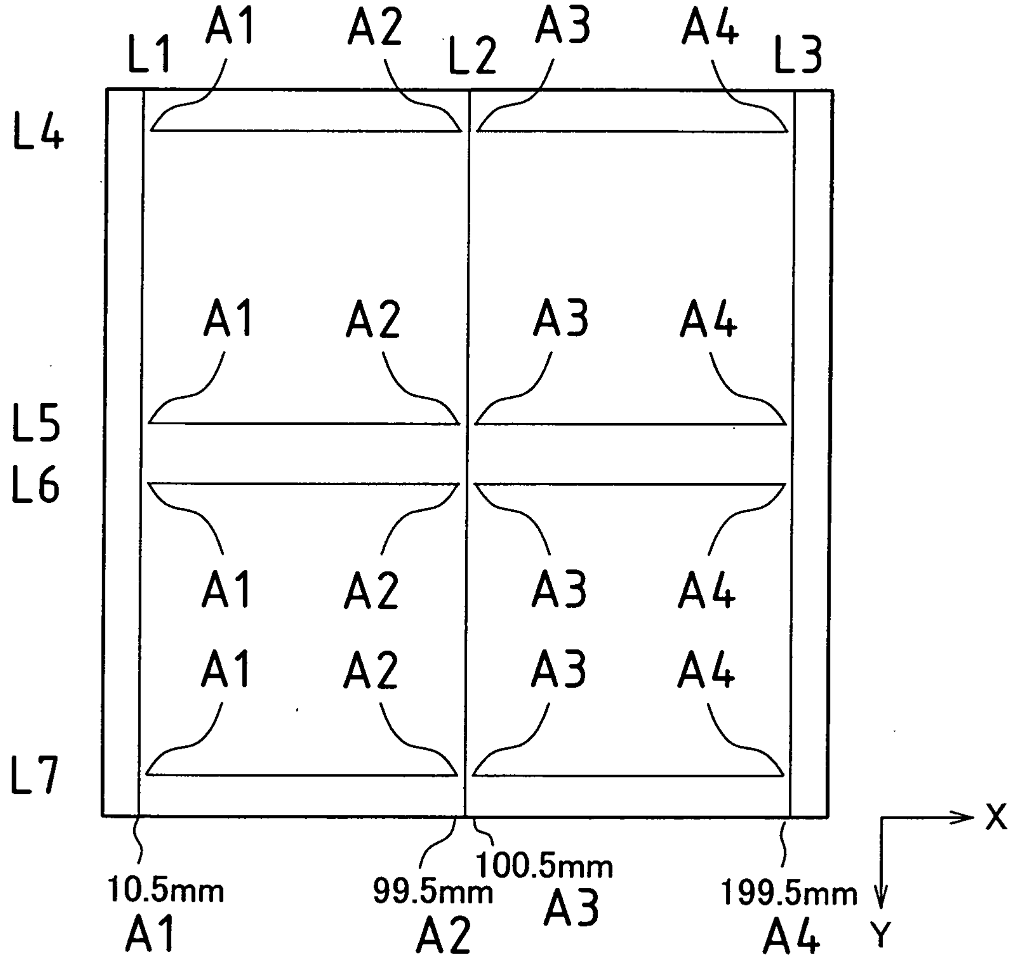
L1
A1
A2
L2
A3
A4
L3
L4
A1
A2
A3
A4
L5
L6
A1
A2
A3
A4
A1
A2
A3
A4
L7
X
10.5mm
A1
99.5mm
A2
100.5mm
A3
199.5mm
A4
Y

FIG.9

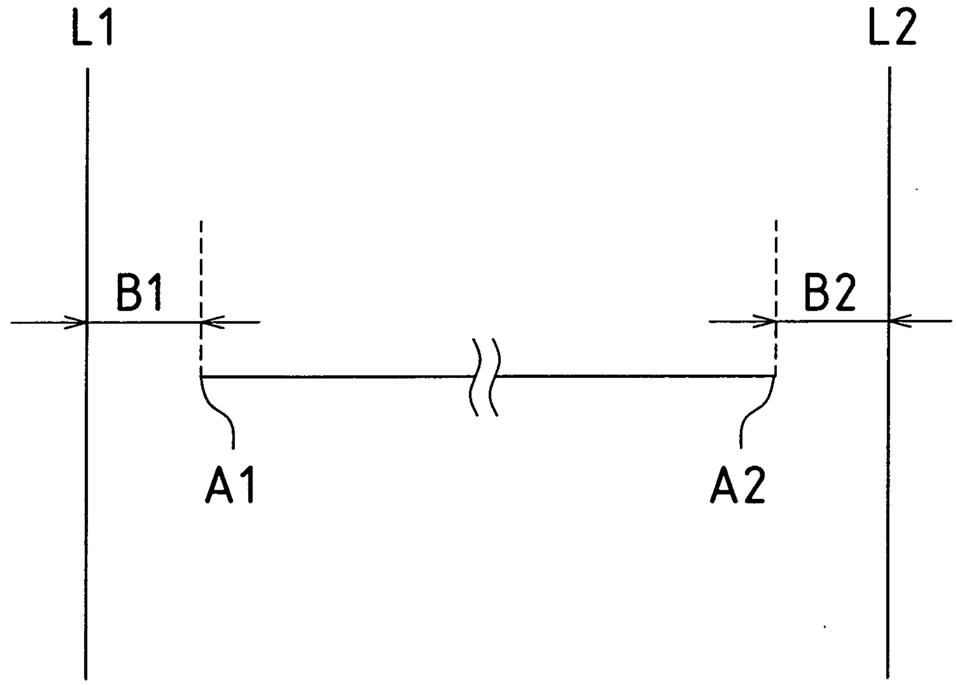

FIG.10

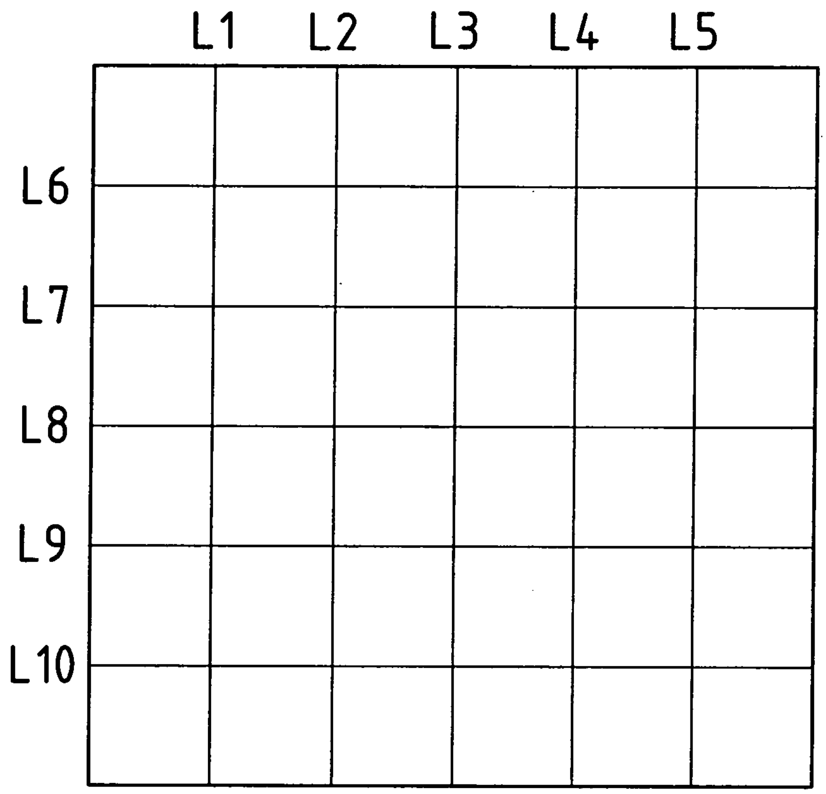

FIG.11

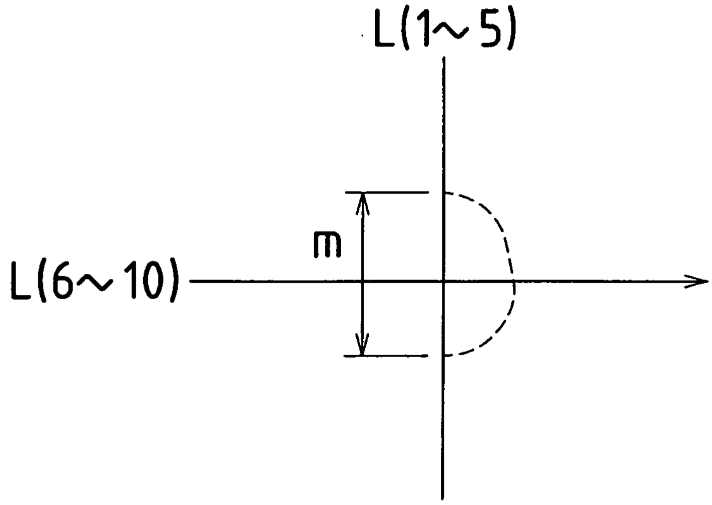


FIG.12

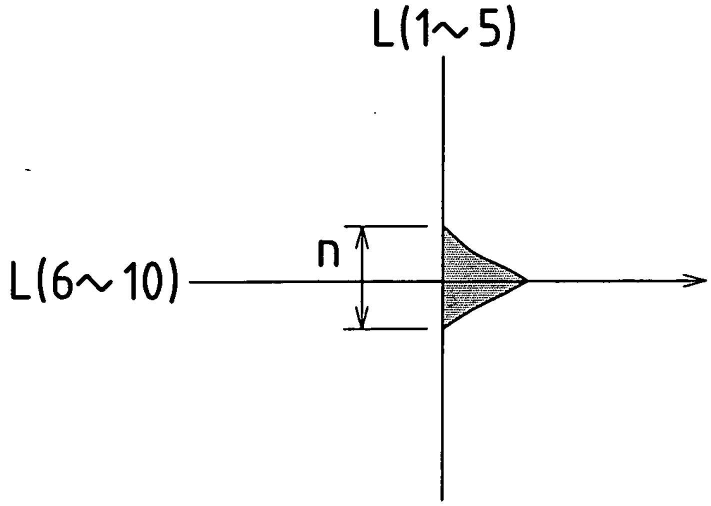

FIG.13

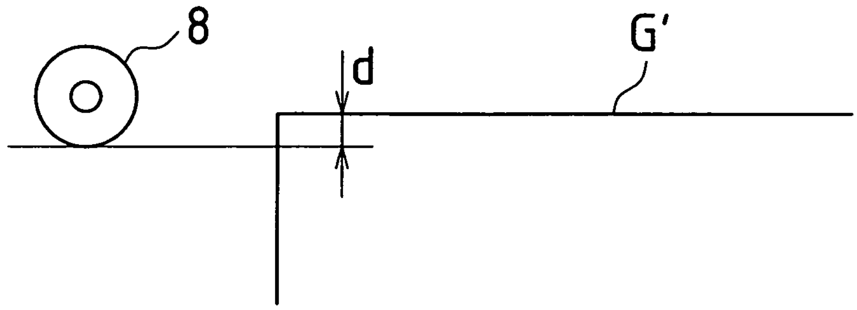
8
d
G'

FIG.14

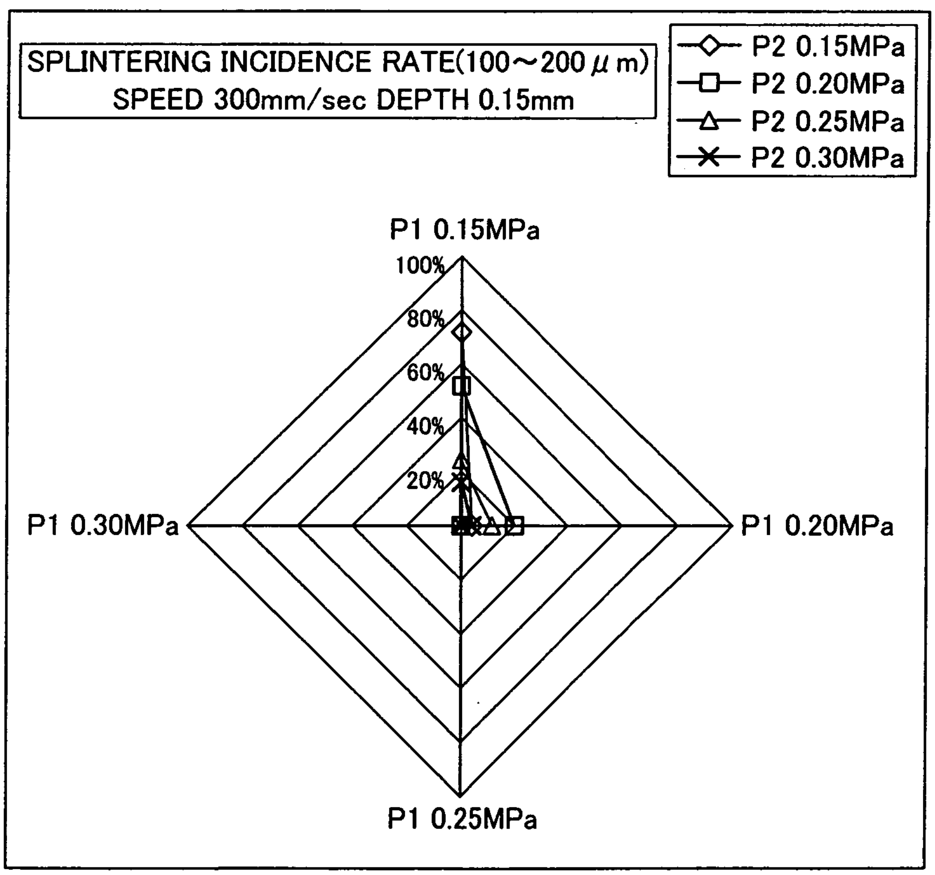
SPLINTERING INCIDENCE RATE(100～200 μm)
SPEED 300mm/sec DEPTH 0.15mm
P2 0.15MPa
P2 0.20MPa
P2 0.25MPa
P2 0.30MPa
P1 0.15MPa
100%
80%
60%
40%
20%
P1 0.20MPa
P1 0.25MPa
P1 0.30MPa

FIG.15

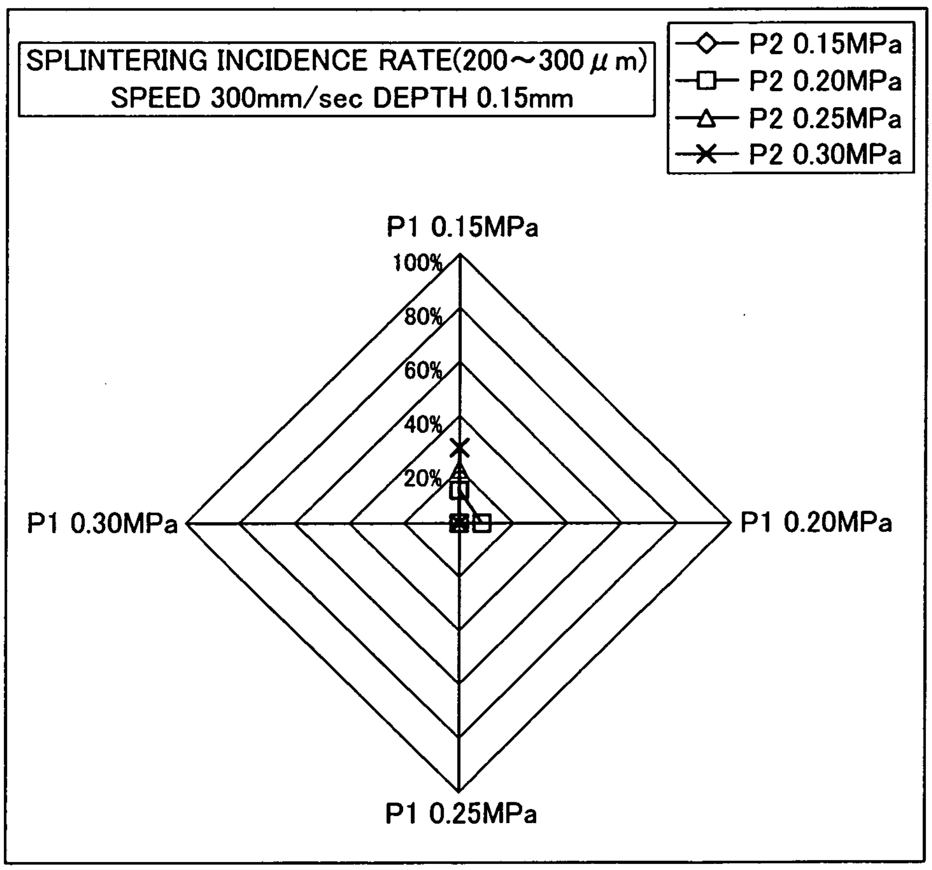
SPLINTERING INCIDENCE RATE(200～300 μm)
SPEED 300mm/sec DEPTH 0.15mm
P2 0.15MPa
P2 0.20MPa
P2 0.25MPa
P2 0.30MPa
P1 0.15MPa
100%
80%
60%
40%
20%
P1 0.30MPa
P1 0.20MPa
P1 0.25MPa

FIG.16

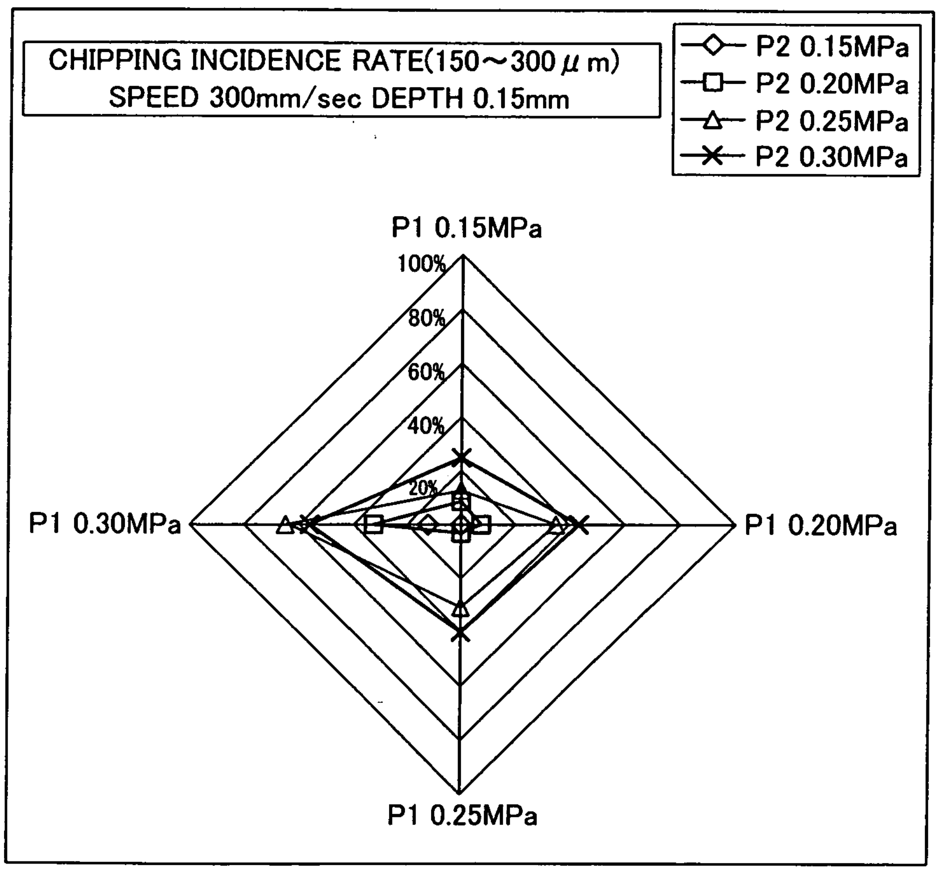
CHIPPING INCIDENCE RATE(150～300 μm)
SPEED 300mm/sec DEPTH 0.15mm
P2 0.15MPa
P2 0.20MPa
P2 0.25MPa
P2 0.30MPa
P1 0.15MPa
100%
80%
60%
40%
20%
P1 0.30MPa
P1 0.20MPa
P1 0.25MPa

FIG.17

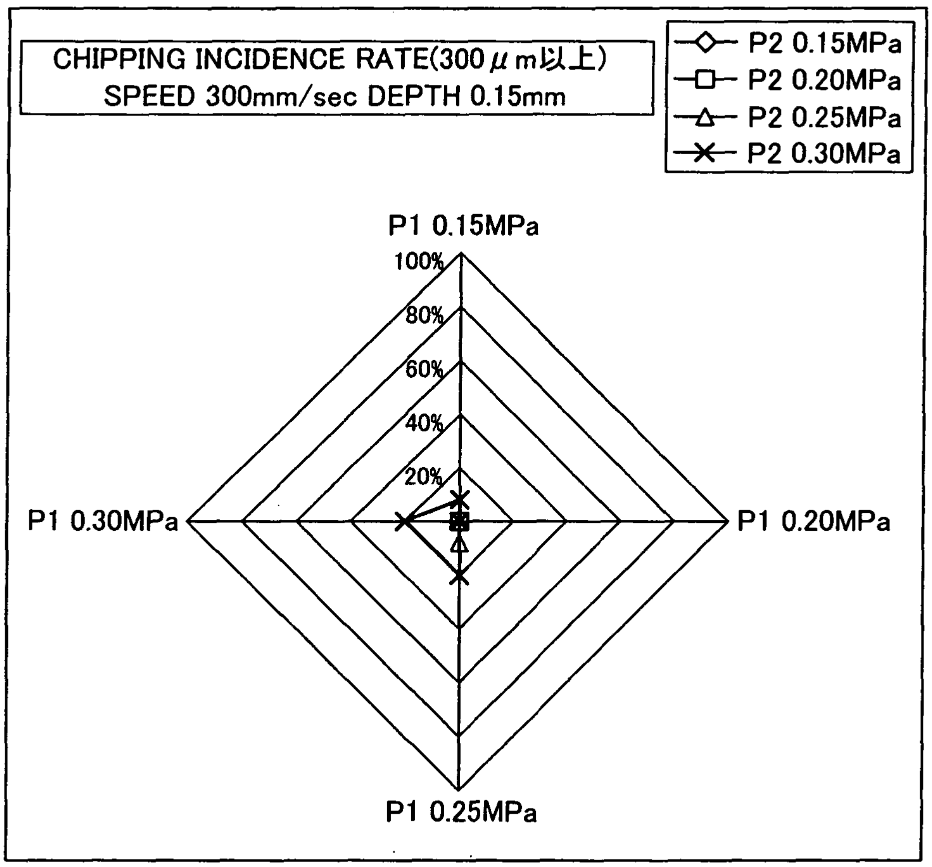
CHIPPING INCIDENCE RATE(300μm以上)
SPEED 300mm/sec DEPTH 0.15mm
P2 0.15MPa
P2 0.20MPa
P2 0.25MPa
P2 0.30MPa
P1 0.15MPa
100%
80%
60%
40%
20%
P1 0.30MPa
P1 0.20MPa
P1 0.25MPa

FIG.18

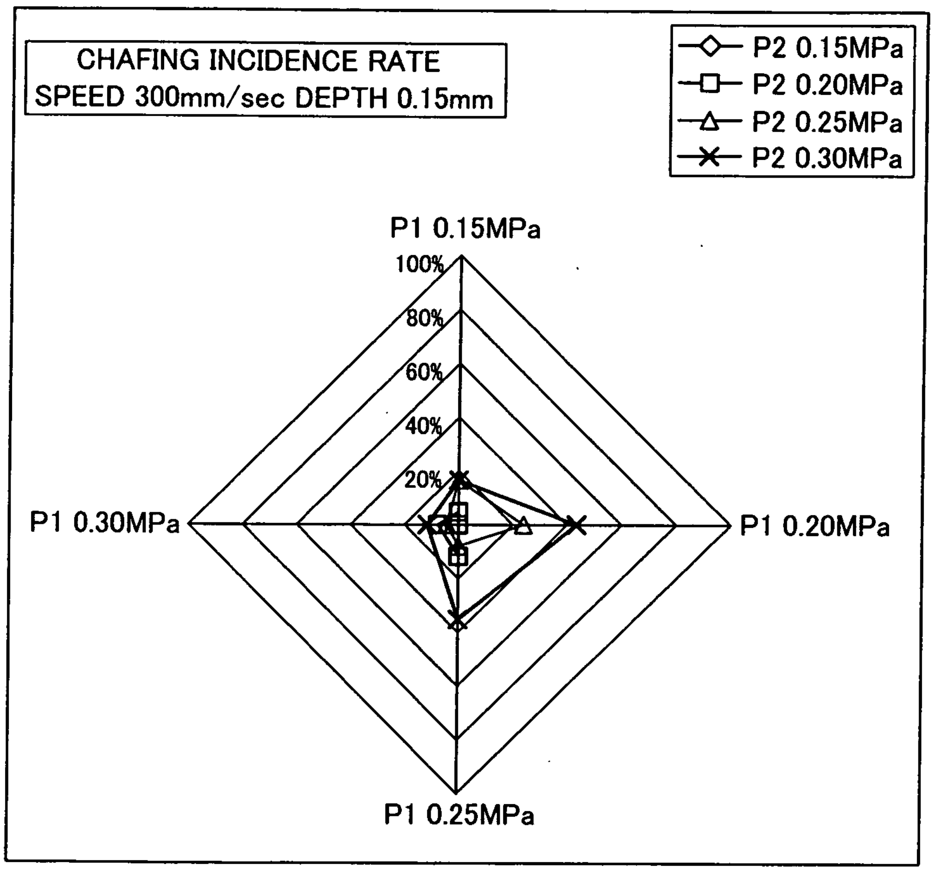
CHAFING INCIDENCE RATE
SPEED 300mm/sec DEPTH 0.15mm
P2 0.15MPa
P2 0.20MPa
P2 0.25MPa
P2 0.30MPa
P1 0.15MPa
100%
80%
60%
40%
20%
P1 0.30MPa
P1 0.20MPa
P1 0.25MPa

FIG.19

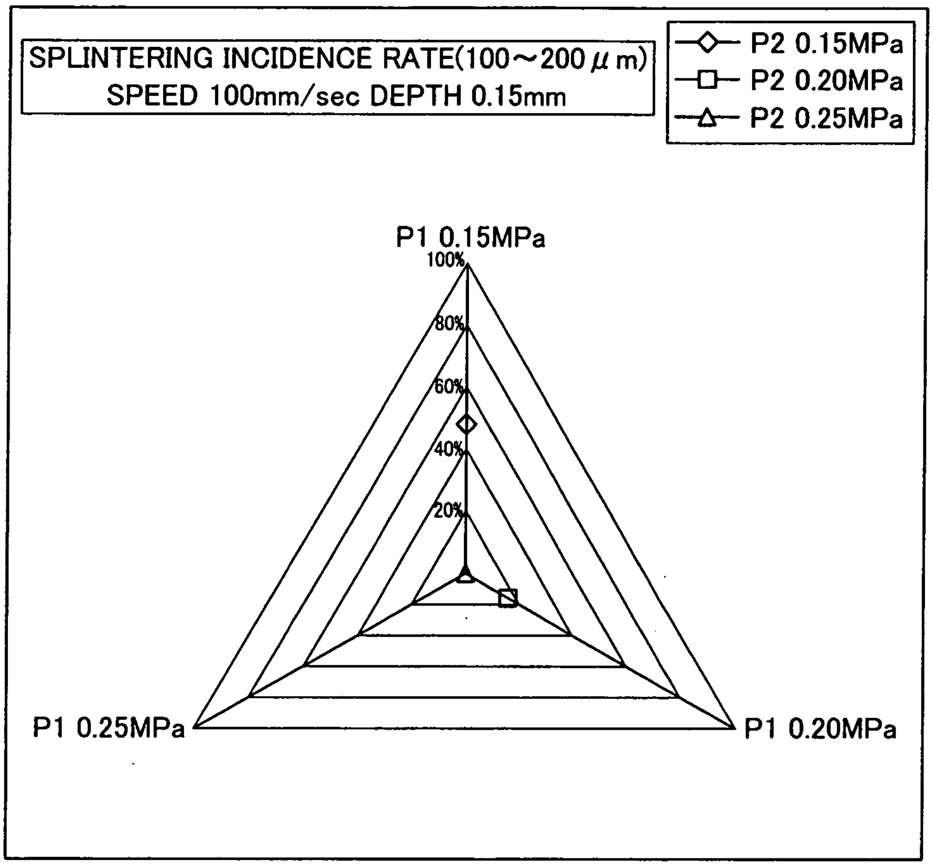
SPLINTERING INCIDENCE RATE(100～200 μm)
SPEED 100mm/sec DEPTH 0.15mm
P2 0.15MPa
P2 0.20MPa
P2 0.25MPa
P1 0.15MPa
100%
80%
60%
40%
20%
P1 0.25MPa
P1 0.20MPa

FIG. 20

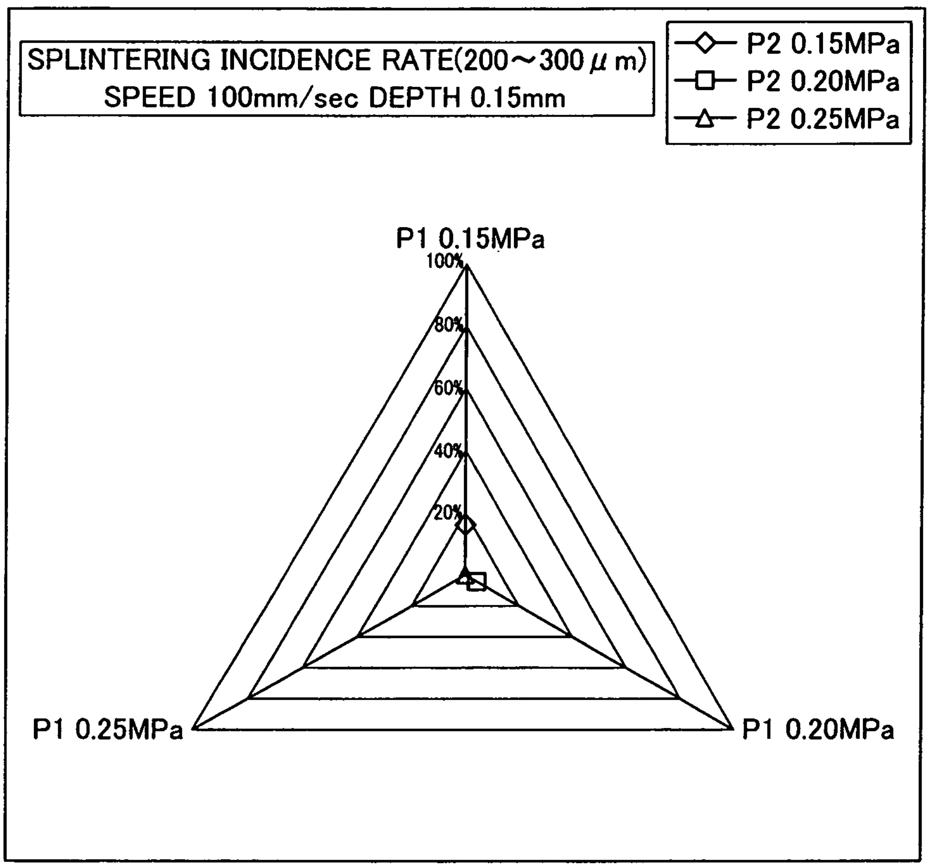
SPLINTERING INCIDENCE RATE(200～300 μm)
SPEED 100mm/sec DEPTH 0.15mm
P2 0.15MPa
P2 0.20MPa
P2 0.25MPa
P1 0.15MPa
100%
80%
60%
40%
20%
P1 0.25MPa
P1 0.20MPa

FIG.21

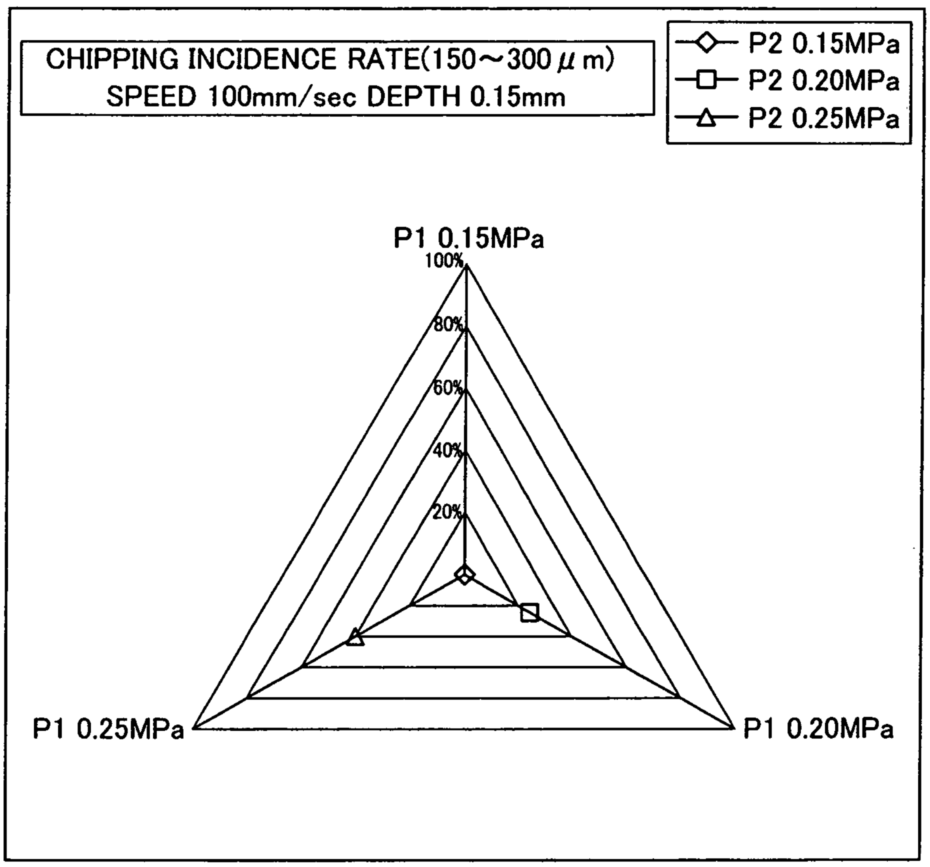
CHIPPING INCIDENCE RATE(150～300 μm)
SPEED 100mm/sec DEPTH 0.15mm
P2 0.15MPa
P2 0.20MPa
P2 0.25MPa
P1 0.15MPa
100%
80%
60%
40%
20%
P1 0.25MPa
P1 0.20MPa

FIG.22

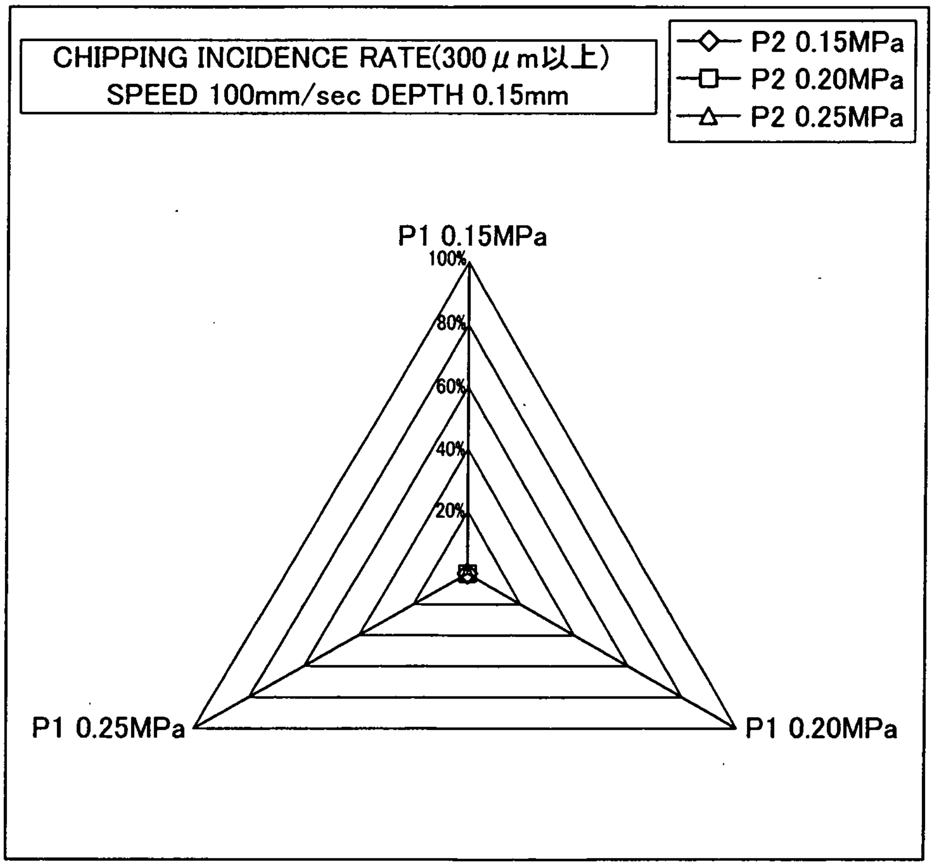
CHIPPING INCIDENCE RATE(300 μ m以上)
SPEED 100mm/sec DEPTH 0.15mm
P2 0.15MPa
P2 0.20MPa
P2 0.25MPa
P1 0.15MPa
100%
80%
60%
40%
20%
P1 0.25MPa
P1 0.20MPa

FIG.23

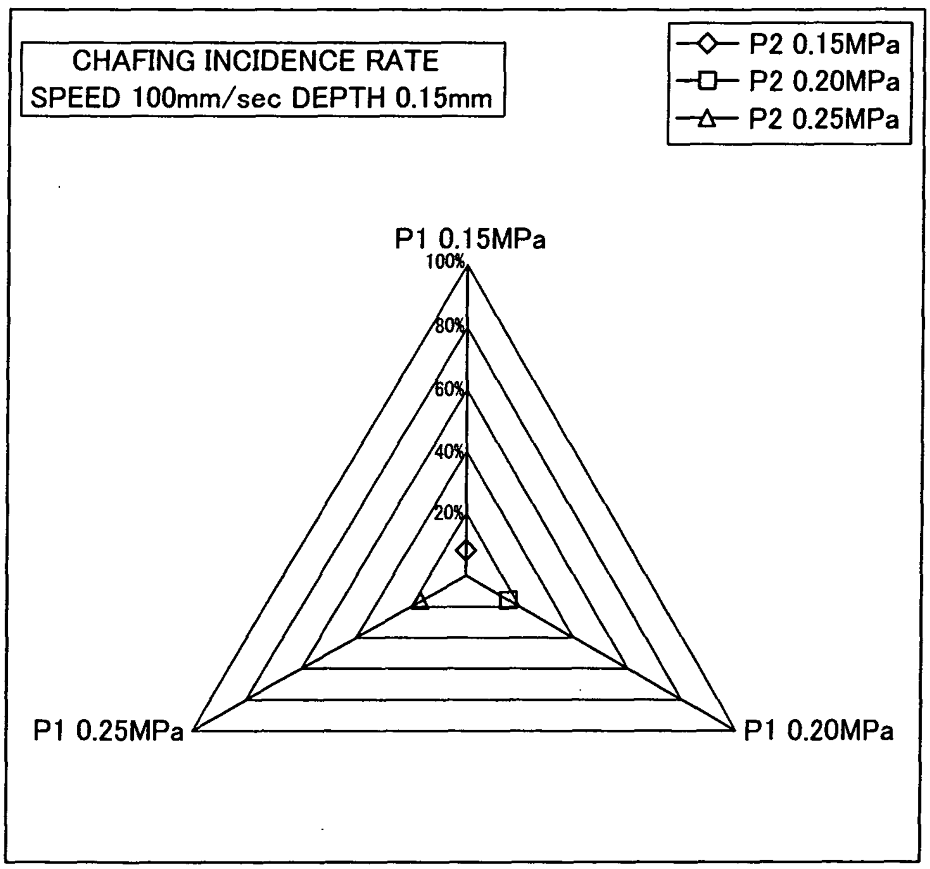
CHAFING INCIDENCE RATE
SPEED 100mm/sec DEPTH 0.15mm
P2 0.15MPa
P2 0.20MPa
P2 0.25MPa
P1 0.15MPa
100%
80%
60%
40%
20%
P1 0.25MPa
P1 0.20MPa

FIG.24

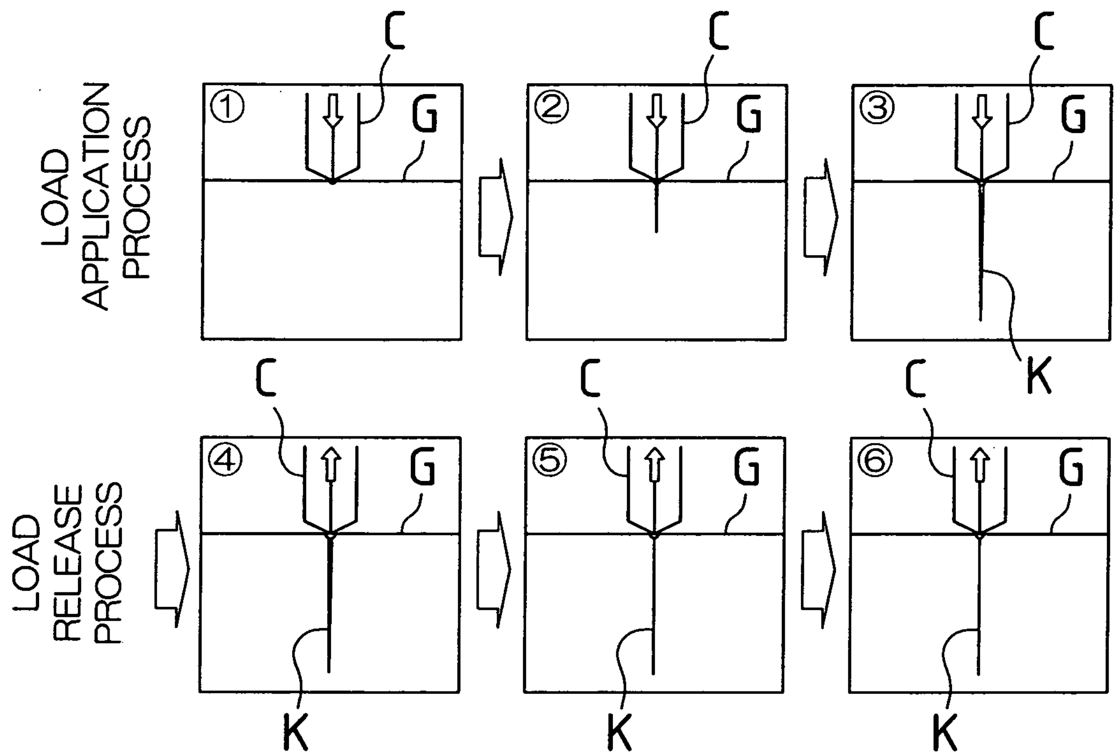
LOAD APPLICATION PROCESS
LOAD RELEASE PROCESS
C
G
K
①
②
③
④
⑤
⑥

FIG.25

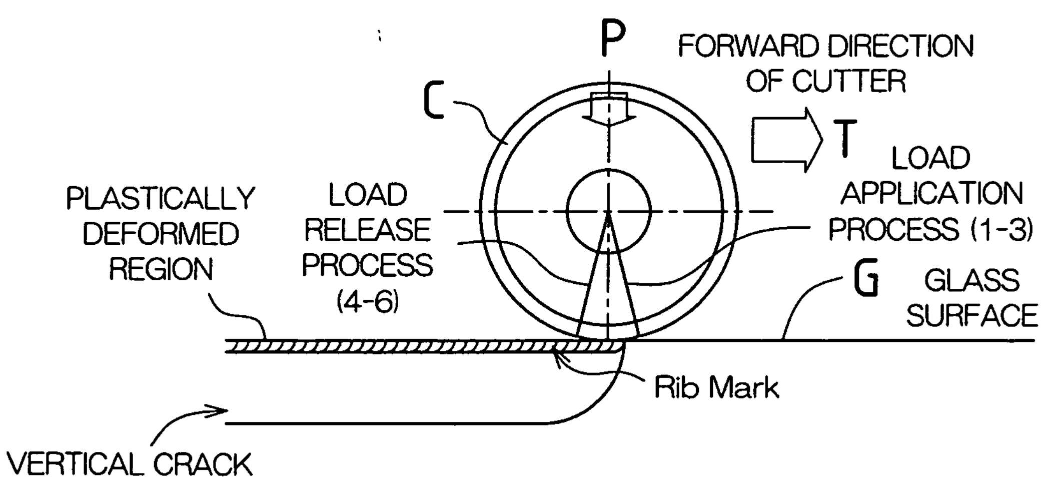
P
FORWARD DIRECTION OF CUTTER
C
T
LOAD APPLICATION PROCESS (1-3)
PLASTICALLY DEFORMED REGION
LOAD RELEASE PROCESS (4-6)
G
GLASS SURFACE
Rib Mark
VERTICAL CRACK

FIG.26

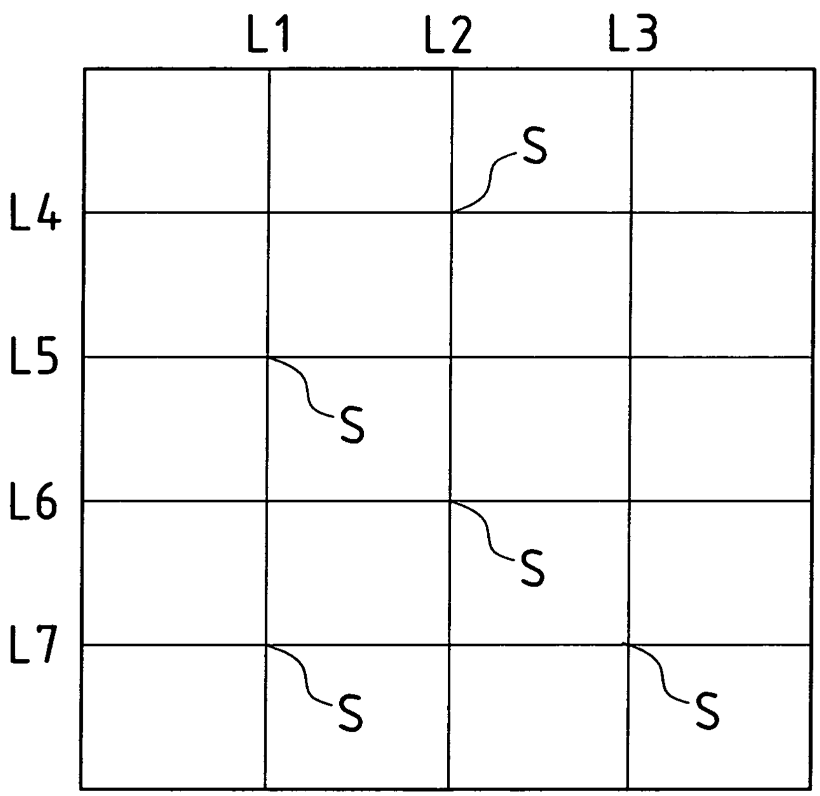

FIG.27

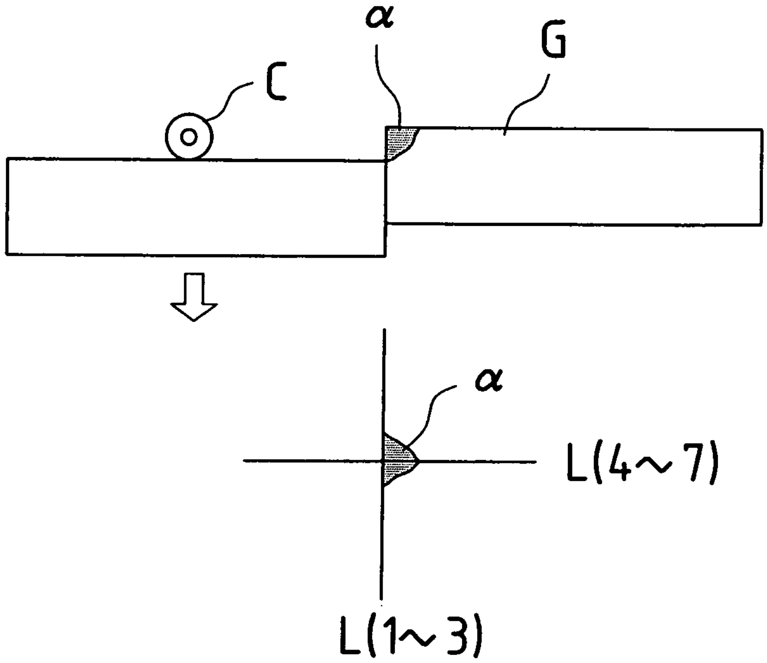


FIG.28

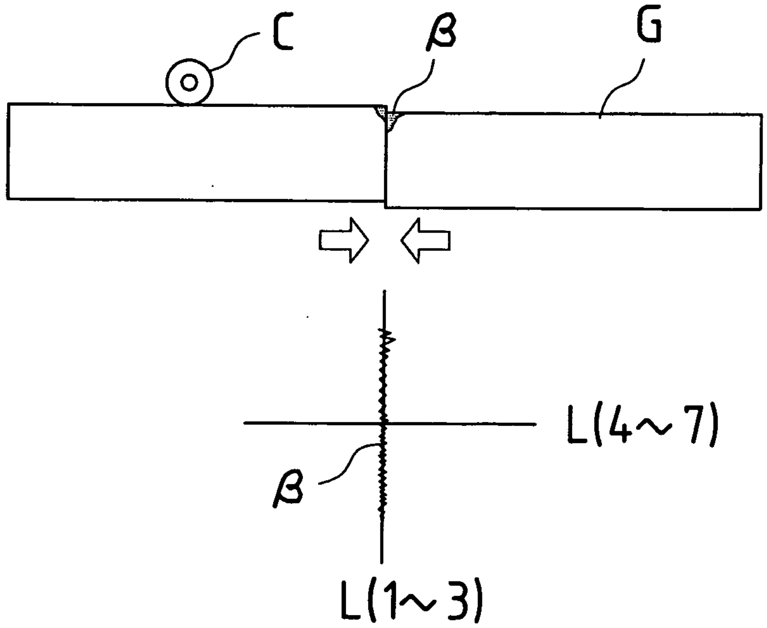

FIG.29

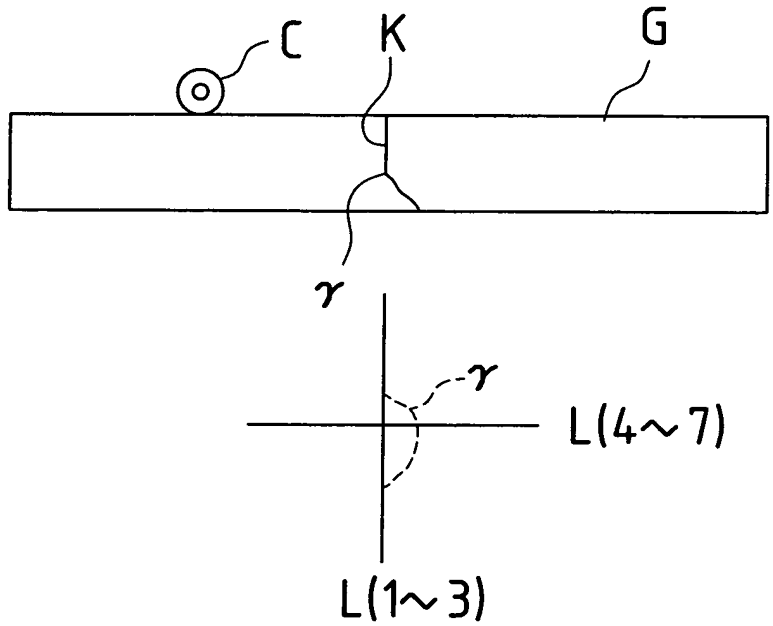

## INTERNATIONAL SEARCH REPORT

International application No.
PCT/JP03/13587

A. CLASSIFICATION OF SUBJECT MATTER
Int.Cl$^7$ B28D5/00, C03B33/027

According to International Patent Classification (IPC) or to both national classification and IPC

B. FIELDS SEARCHED

Minimum documentation searched (classification system followed by classification symbols)
Int.Cl$^7$ B28D5/00, C03B33/027

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-1996 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-328833 A (Mitsuboshi Diamond Industrial Co., Ltd.), 27 November, 2001 (27.11.01), (Family: none) | 1-4 |
| A | US 5836229 A (Mitsuboshi Daiamond Industrial Co., Ltd.), 17 November, 1998 (17.11.98), & EP 773194 A1 & JP 9-188534 A | 1-4 |
| A | JP 11-157860 A (Kabushiki Kaisha Berudekkusu), 15 June, 1999 (15.06.99), (Family: none) | 1-4 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 November, 2003 (19.11.03) | 02 December, 2003 (02.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.
PCT/JP03/13587

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-214997 A (Sanyo Electric Co., Ltd.), 11 August, 1998 (11.08.98), (Family: none) | 1-4 |
| A | US 5286343 A (Regents of the University of California), 15 February, 1994 (15.02.94), (Family: none) | 1-4 |

Form PCT/ISA/210 (continuation of second sheet) (July 1998)